(19) Europäisches Patentamt
European Patent Office
Office européen des brevets

(11) **EP 2 587 326 B1**

(12) **EUROPEAN PATENT SPECIFICATION**

(45) Date of publication and mention
of the grant of the patent:
**30.09.2015   Bulletin 2015/40**

(51) Int Cl.:
***G05B 23/02*** *(2006.01)*

(21) Application number: **11186913.7**

(22) Date of filing: **27.10.2011**

(54) **Method of assessment of a risk involved in operating a measurement device on a measurement site in an industrial process**

Verfahren zur Bewertung eines mit dem Betrieb eines Messgerätes an einer Messstelle in einem industriellen Prozess verbunden Risikos

Procédé d' évaluation d'un risque associé au fonctionnement d' un dispositif de mesure sur  un site de mesure au sein d'un process industriel

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.05.2013   Bulletin 2013/18**

(73) Proprietor: **Endress + Hauser Messtechnik GmbH+Co. KG**
**79576 Weil am Rhein (DE)**

(72) Inventor: **Vaissière, Dimitri**
**68130 Wittersdorf (FR)**

(74) Representative: **Andres, Angelika Maria**
**Endress+Hauser (Deutschland) AG+Co. KG**
**PatServe**
**Colmarer Strasse 6**
**79576 Weil am Rhein (DE)**

(56) References cited:
- **IRAJ ELYASI KOMARI ET AL: "Extended Dependability Analysis of Information and Control Systems by FME(C)A-technique: Models, Procedures, Application", DEPENDABILITY OF COMPUTER SYSTEMS, 2009. DEPCOS-RELCOMEX '09. FOURTH INTERNATIONAL CONFERENCE ON, IEEE, PISCATAWAY, NJ, USA, 30 June 2009 (2009-06-30), pages 25-32, XP031531357, ISBN: 978-0-7695-3674-3**
- **THOMAS LANZISERO: "Applied Safety Science and Engineering Techniques (ASSETâ ): Taking HBSE to the next level", PRODUCT COMPLIANCE ENGINEERING (ISPCE), 2010 IEEE SYMPOSIUM ON, IEEE, PISCATAWAY, NJ, USA, 18 October 2010 (2010-10-18), pages 1-6, XP031802310, ISBN: 978-1-4244-7498-1**
- **ROBERT BORGOVINI ET AL: "Failure Mode, Effects and Criticality Analysis (FMECA)", CRTA-FMECA, 1 April 1993 (1993-04-01), pages 1-101, XP55022662, Rome, NY 13442-4700**

**Description**

The present invention concerns a method of assessment of a risk involved in operating a measurement device on a measurement site in an industrial process.

Measurement devices are used in nearly all branches of industry for measuring physical quantities, in particular quantities related to ongoing production processes. Measurement indications indicating the value of the quantity measured by the device are for example commonly used in process automation for monitoring, controlling and/or regulating an industrial process, in particular a production process.

Thus measurement devices play a vital part in industrial processes, and a defect of a device may have severe consequences. Industrial production sites are quite often very complex sites including a large number of measurement devices on various measurement sites. In order to ensure and/or improve quality and safety of the industrial process it is advantageous, to perform a criticality analysis preferably for every measurement device on the site. Today criticality of a device is typically determined based on a product of a probability of a defect of the respective device and a severity of the consequences of this defect. Criticality analysis thus allows to identify the device forming the greatest risk in terms of probability and severity of the consequences to the overall performance of the process. Thus it is a valuable means in identifying candidates for reliability improvement and/or optimizing maintenance and calibration or verification of measurement devices as well as safety measures, such as provisions of redundant systems.

In the article "Applied Safety Science 1-7 and Engineering Techniques (ASSET™), Taking HSBE to the Next Level", Symposium on Product Compliance Engineering (ISPCE), IEEE, PISCATAWAY, NJ, USA, dated October 18, 2010 (XP031802310; ISBN 987-1-4244-7498-1) by Thomas Lanzisero a method of determining a risk of harm based on a probability of harm occurring and a severity of its consequences is described, wherein weighting factors are applied to the severity and the consequences.

In the article "Extended Dependability Analysis of Information and Control Systems by FME(C)A-technique: Models, Procedures, Applications"; Fourth International Conference on Dependability of Computer Systems, IEEE, PISCATAWAY, NJ, USA, dated June 30, 2009 (XP 031531357; ISBN: 978-0-7695-3674-3) Iraj Elyasi Komari et. al describe a failure causes and effects analysis of a complex information and control systems consisting of interacting components which considers a probability of a failure of the system and its consequences. In addition assessment of a recovery time it is recommended for maintainable critical-purpose information and control systems.

Even though criticality analysis is a vital instrument, e.g. in optimizing maintenance procedures for the devices, it does not take into account, that maintenance of a device may not always be possible. This is for example the case, when spare and/or wear parts for the device or suitable replacement devices are no longer available on the market.

It is an object of the invention to provide a method of assessment of a risk involved in operating a measurement device on a measurement site in an industrial process, which takes into account a maintainability of the device.

To this extend the invention comprises a method of assessment of a risk involved in operating a measurement device on a measurement site in an industrial process, comprising the steps of:

- determining a degree of difficulty of a maintainability of the device,
- determining a probability of an undetected defect of the device,
- determining a severity of the consequences of the defect of the device,
- weighing the determined probability, the determined severity and the determined degree of difficulty of the maintainability with corresponding predefined weighing factors corresponding to a contribution of the degree of difficulty of the maintainability, the probability and the severity to the risk, and
- determining the risk based on a length of a vector whose coordinates are given by the weighted difficulty of maintainability, the weighted probability and the weighted severity.

According to a refinement of the invention, the degree of difficulty of the maintainability of the device is determined based on an availability of resources for maintenance and/or repair of the device, an availability of spare and/or wear parts for the device and/or an availability of suitable replacement devices.

According to a further refinement the probability of an undetected defect of the device is determined based

- on device specific properties, in particular on an expected life time of the device, its operating hours and/or its statistical failure rate,
- on measurement site specific properties, in particular on environment conditions prevailing at the measurement site, in particular an exposure of the measurement device to high or varying temperatures and/or pressures, to aggressive and/or abrasive media and/or to vibrations, and/or
- on means available at the measurement site for detecting a defect of the device and a frequency of their application.

According to a further refinement of the invention, severity of the consequences of the undetected defect is determined based the on the consequences of the defect, in particular on consequences regarding safety hazards for people, for the environment and/or for the measurement site and an industrial production plant it is embedded in, on consequences regarding a violation of rules, regulations and/or requirements the device is required to comply to, on consequences regarding quality, quantity and/or availability of end -, intermediate - or by - products produced by the industrial process, and/or on consequence regarding operating costs involved in running the industrial process.

According to a further refinement a quantitative determination of the probability, the severity and the degree of difficulty of the maintainability is performed on discrete scales given by predefined levels for the probability, severity and the degree of difficulty of the maintainability, in particular a low level, a medium level and a high level for the probability, the severity and the degree of difficulty of the maintainability.

According to a refinement of the last mentioned refinement, a fixed numerical value is assigned to each level of the probability, the severity and the degree of difficulty of the maintainability.

According to a further refinement of the invention, the risk involved in operating the measurement device is classified based on the length of a vector on a discrete scale given by predefined risk levels, in particular a low level comprising a range of vector lengths representing a low risk, a medium level comprising a range of vector lengths representing a medium risk, a high level comprising a range vector lengths representing a high risk, and an unbearable level comprising a range of vector lengths representing an unbearable risk.

The invention and further advantages are explained in more detail using the figure of the drawing.

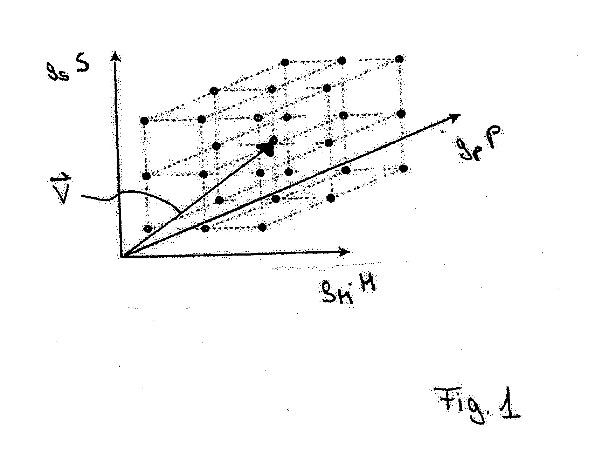

Fig. 1 shows: a three dimensional graphic illustration of the assessed risk as a vector in a three-dimensional coordinate system described by three coordinates given by the weighted discrete level of the determined probability, the weighted discrete level of the determined severity and the weighted discrete level of the determined maintainability.

The method according to the invention concerns an assessment of a risk R involved in operating a measurement device on a measurement site in an industrial process.

It comprises the steps of:

- determining a probability P of an undetected defect of the device,
- determining a severity S of the consequences of the defect of the device, and
- determining a degree of difficulty of a maintainability M of the device.

Quantitative determination of the probability P, the severity S and the degree of difficulty of the maintainability M is preferably performed on a discrete scale given by predefined levels of probability, severity and difficulty of maintainability. In order to do so the ranges of probabilities, severities and degrees of difficulty of maintainability are for example partitioned into a low level, a medium level and a high level range, and a fixed numerical value is assigned to each level. To this extend the low level can be assigned the low numerical value LOW = 1, the medium level can be assigned the intermediate numerical value MEDIUM = 2 and the high level can be assigned the high numerical value HIGH = 3. Application of discrete scales facilitates determination of these properties in a reproducible way.

A device is considered defect, in case it does no longer perform measurements with the measurement accuracy specified for it.

The probability P of an undetected defect of the device is preferably determined based on device specific properties as well as on measurement site specific properties and based on means provided at the measurement site, for detecting a defect of the device.

The device specific properties preferably include an expected life time of the device, its operating hours and/or its statistical failure rate. Obviously, the probability P of an undetected defect will be lower for a device with proven robustness then for a device which is known to be more sensitive.

The measurement site specific properties of the device preferably include environment conditions prevailing at the measurement site, like for example an exposure of the measurement device to harsh conditions such as high or varying temperatures and/or pressures, aggressive and/or abrasive media and/or vibrations.

Means for detecting a defect of the device are for example redundant measurement systems or means for checking the measurement properties of the device. In case a redundant system is provided at the measurement site, a defect of the device will in almost all cases be detected immediately by comparison of the measurement results of the device and the redundant device. In consequence a defect of the device will only remain undetected, in case both devices exhibit the same defect at the same time. Thus there is a very low probability P of occurrence of an undetected defect.

Means for checking the measurement properties of the device are for example performances of regular on-site verifications of the device or periodic or sporadic executions of measurements of the property measured by the device with another device of the same or a different type. When means for checking the measurement properties of the device are foreseen, the probability P of an undetected defect is inversely proportional to the frequency of their application.

The severity S of the consequences of the defect of the device is preferably determined based on information pertinent to the industrial process and the measurement site embedded in this process. This information is for example retrieved by a thorough analysis of the production process in which preferably all potential consequences of the defect of the device are taken into account. The consequences of the defect include for example safety hazards the defect causes for people, for the environment and/or for the measurement site and the industrial production plant it is embedded in, consequences regarding a violation of rules, regulations and/or requirements the device is required to comply to, consequences regarding the quality, quantity and the availability of end -, intermediate - or by-products produced by the industrial process, as well as consequence regarding the operating costs involved in running the industrial process.

The degree of difficulty of the maintainability M of the device is preferably determined based on the availability of resources for maintenance and/or repair of the device, the availability of spare and/or wear parts for the device and/or suitable replacement devices. A high level of difficulty of maintainability M will for example be assigned to devices which have been phased-out for a long time, e.g. for more than four years. Also a high level of difficulty of maintainability M will for example be assigned to devices for which spare parts or repair will only be available for a short time, e.g. for less than one year. Correspondingly a medium level of difficulty of maintainability M will for example be assigned to devices which have been phased out not so long ago, e.g. longer than 2,5 years ago but shorter than four years ago, or for which spare parts or repair will be available for a slightly longer time, e.g. for the next two years. A low level of difficulty of maintainability M will for example be assigned to devices for which a long term availability of replacements, spare parts and repair is given.

In a next step, the contributions of probability P, severity S and difficulty of maintainability M to the overall risk involved in operating the device are taken into account by weighing the determined probability P, the determined severity S and the determined difficulty of maintainability M each with a corresponding predefined weighing factor $g_S$, $g_P$, $g_M$.

Typically the contribution of the severity S of the consequence of the defect to the overall risk is larger than the contribution of the probability P of an undetected defect, and the difficulty of maintainability M has the least effect on the overall risk. Depending on the device, the measurement site, and the industrial process the weighing factors $g_s$, $g_P$, $g_M$ can for example be determined to be $g_S = 3$, $g_P = 2$ and $g_M = 1$.

This allows for every device used in the industrial process to be graphically illustrated as a vector $\vec{V}$ pointing to a discrete point in a three-dimensional coordinate system described by three coordinates given by the weighted discrete level of the determined probability $g_P$ P, the weighted discrete level of the determined severity $g_S$ S and the weighted discrete level of the determined difficulty of maintainability $g_M$ M. Fig 1 shows an example of the vector $\vec{V}$ in a scaled coordinate system, wherein each coordinate axis is represented scaled proportional to an inverse of the respective weighing factor $g_S$, $g_P$, $g_M$.

$$\vec{V} = \begin{pmatrix} g_M M \\ g_P P \\ g_S S \end{pmatrix}$$

In a last step the risk R involved in operating the device on the measurement site in this industrial process is determined based on a length $L_R$ of this vector $\vec{V}$ given by:

$$L_R = \sqrt{\left(g_S S\right)^2 + \left(g_P P\right)^2 + \left(g_M M\right)^2}$$

Based on the length $L_R$ of the vector $\vec{V}$, the risk R involved is preferably classified based on a discrete scale given by predefined risk levels. In order to do so the range of the possible lengths $L_R$ of the vector $\vec{V}$ is preferably partitioned into a range of vector lengths representing a low risk, a range of vector lengths representing a medium risk, a range of vector lengths representing a high risk, and a range of vector lengths representing an unbearable risk.

An example of these risk levels based on the weighted discrete level of the determined probability $g_P$ P, the weighted discrete level of the determined severity $g_S$ S and the weighted discrete level of the determined difficulty of maintainability $g_M$ M, using the numerical values LOW = 1, MEDIUM = 2 and HIGH = 3, and the weighing factors $g_S = 3$, $g_P = 2$ and $g_M = 1$ as described above is given in the table below.

| $g_M$ M | $g_P$ P | $g_S$ S | $L_R$ | Risk Level |
|---|---|---|---|---|
| 1 | 2 | 3 | 3,74 | LOW |
| 2 | 2 | 3 | 4,12 | |
| 3 | 2 | 3 | 4,69 | |
| 1 | 4 | 3 | 5,10 | |
| 2 | 4 | 3 | 5,39 | |
| 3 | 4 | 3 | 5,83 | |
| 1 | 2 | 6 | 6,40 | |
| 2 | 2 | 6 | 6,63 | MEDIUM |
| 3 | 6 | 3 | 6,78 | |
| 1 | 6 | 3 | 7,00 | |
| 2 | 2 | 6 | 7,00 | |
| 3 | 4 | 6 | 7,28 | |
| 1 | 6 | 3 | 7,35 | |
| 2 | 4 | 6 | 7,48 | |
| 3 | 4 | 6 | 7,81 | HIGH |
| 1 | 6 | 6 | 8,54 | |
| 2 | 6 | 6 | 8,72 | |
| 3 | 6 | 6 | 9,00 | |
| 1 | 2 | 9 | 9,27 | |
| 2 | 2 | 9 | 9,43 | |
| 3 | 2 | 9 | 9,70 | |
| 1 | 4 | 9 | 9,9, | UNBEARABLE |
| 2 | 4 | 9 | 10,05 | |
| 3 | 4 | 9 | 10,30 | |
| 1 | 6 | 9 | 10,86 | |
| 2 | 6 | 9 | 11,00 | |
| 3 | 6 | 9 | 11,22 | |

Thus the invention provides a structured and relevant way to assess the risk R involved in operating the measurement device on the measurement site in this industrial process.

The method according to the invention can be performed for a single measurement device on the industrial site, for all measurement devices used in a particular process performed on the industrial site, for all devices of a given type used on the industrial site, for all measurement devices applied in a selected area of the industrial site, or for all measurement devices applied on the industrial site.

It allows to identify highly risky situations and builds a tangible foundation to define pragmatic and cost optimized actions on the measurement site within the industrial process. It provides a profound basis for maintenance, calibration and device replacement schemes, as well as for the application of additional safety measures, like for example provisions of redundant measurement systems or means for periodic or sporadic checking of the measurement properties of individual devices.

**Claims**

1.  Method of assessment of a risk (R) involved in operating a measurement device on a measurement site in an industrial process, comprising the steps of:

    - determining a degree of difficulty of a maintainability (M) of the device based on an availability of resources for maintenance and/or repair of the device, an availability of spare and/or wear parts for the device and/or an availability of suitable replacement devices,
    - determining a probability (P) of an undetected defect of the device,
    - determining a severity (S) of the consequences of the defect of the device,
    - weighing the determined probability (P), the determined severity (S) and the determined degree of difficulty of the maintainability (M) with corresponding predefined weighing factors ($g_S$, $g_P$, $g_M$) corresponding to a contribution of the degree of difficulty of the maintainability (M), the probability (P) and the severity (S) to the risk (R), and
    - determining the risk (R) based on a length ($L_R$) of a vector ($\vec{V}$) whose coordinates are given by the weighted difficulty of maintainability ($g_M$ M), the weighted probability ($g_P$ P) and the weighted severity ($g_S$ S).

2.  Method according to claim 1, wherein the probability (P) of an undetected defect of the device is determined based

    - on device specific properties, in particular on an expected life time of the device, its operating hours and/or its statistical failure rate,
    - on measurement site specific properties, in particular on environment conditions prevailing at the measurement site, in particular an exposure of the measurement device to high or varying temperatures and/or pressures, to aggressive and/or abrasive media and/or to vibrations, and/or
    - on means available at the measurement site for detecting a defect of the device and a frequency of their application.

3.  Method according to claim 1, wherein severity (S) of the consequences of the undetected defect is determined based on the consequences of the defect, in particular on consequences regarding safety hazards for people, for the environment and/or for the measurement site and an industrial production plant it is embedded in, on consequences regarding a violation of rules, regulations and/or requirements the device is required to comply to, on consequences regarding quality, quantity and/or availability of end -, intermediate - or by-products produced by the industrial process, and/or on consequence regarding operating costs involved in running the industrial process.

4.  Method according to claim 1, wherein a quantitative determination of the probability (P), the severity (S) and the degree of difficulty of the maintainability (M) is performed on discrete scales given by predefined levels for the probability (P), severity (S) and the degree of difficulty of the maintainability (M), in particular a low level (LOW), a medium level (MEDIUM) and a high level (HIGH) for the probability (P), the severity (S) and the degree of difficulty of the maintainability (M).

5.  Method according to claim 4, wherein a fixed numerical value is assigned to each level (LOW, MEDIUM, HIGH) of the probability (P), the severity (S) and the degree of difficulty of the maintainability (M)

6.  Method according to claim 1, wherein the risk (R) involved in operating the measurement device is classified based on the length ($L_R$) of a vector ($\vec{V}$) on a discrete scale given by predefined risk levels, in particular a low level comprising a range of vector lengths representing a low risk, a medium level comprising a range of vector lengths representing a medium risk, a high level comprising a range vector lengths representing a high risk, and an unbearable level comprising a range of vector lengths representing an unbearable risk.

# EP 2 587 326 B1

**Patentansprüche**

1. Verfahren zur Bewertung eines mit dem Betrieb eines Messgerätes an einer Messstelle in einem industriellen Prozess verbundenen Risikos (R), das folgende Schritte umfasst:

   - Bestimmung eines Wartungsschwierigkeitsgrades (M) des Gerätes anhand einer Verfügbarkeit von Ressourcen zur Wartung und/oder Reparatur des Gerätes, einer Verfügbarkeit von Ersatzteilen und/oder Verschleißteilen für das Gerät und/oder einer Verfügbarkeit von geeigneten Austauschgeräten,
   - Bestimmung einer Wahrscheinlichkeit (P) eines nicht erkannten Defekts des Geräts,
   - Bestimmung einer Schwere (S) der Konsequenzen des Defekts des Geräts,
   - Gewichtung der Wahrscheinlichkeit (P), der Schwere (S) und des Wartungsschwierigkeitsgrades (M) mit zugehörigen, vordefinierten einem Beitrag des Wartungsschwierigkeitsgrades (M), der Wahrscheinlichkeit (P) und der Schwere (S) zum Risiko (R) entsprechenden Gewichtungsfaktoren ($g_S$, $g_P$, $g_M$),
   - Bestimmung des Risikos (R) basierend auf der Länge (LR) eines Vektors (V), dessen Koordinaten durch den gewichteten Wartungsschwierigkeitsgrad ($g_M$ M), die gewichtete Wahrscheinlichkeit ($g_P$ P) und die gewichtete Schwere ($g_S$ S) gegeben sind.

2. Verfahren gemäß Anspruch 1, bei dem die Wahrscheinlichkeit (P) eines nicht erkannten Defekts des Geräts bestimmt wird, und zwar

   - anhand von gerätspezifischen Eigenschaften, insbesondere anhand einer erwarteten Lebensdauer des Geräts, dessen Betriebsstunden und/oder dessen statistischer Ausfallrate
   - anhand von messstellenspezifischen Eigenschaften, insbesondere anhand von an der Messstelle vorherrschen Umgebungsbedingungen, insbesondere hohen oder variierenden Temperaturen und/oder Drücken, aggressiven und/oder abrasiven Medien und/oder Vibrationen, denen das Messgerät ausgesetzt ist, und/oder
   - anhand von an der Messstelle zur Verfügung stehen Mitteln zur Erkennung eines Defekts des Geräts und einer Häufigkeit mit der diese eingesetzt werden.

3. Verfahren gemäß Anspruch 1, bei dem die Schwere (S) der Konsequenzen des nicht erkannten Defektes anhand der Konsequenzen des Defektes bestimmt wird, insbesondere anhand von Konsequenzen hinsichtlich einer Gefährdung der Sicherheit von Personen, der Umwelt und/oder der Messstelle und der industriellen Produktionsanlage, in der es sich befindet, von Konsequenzen hinsichtlich eines Verstoßes gegen Regeln, Vorschriften und/oder Anforderungen, die das Gerät zu erfüllen hat, von Konsequenzen hinsichtlich Qualität, Quantität und/oder Verfügbarkeit von durch den industriellen Prozess erzeugten End-, Zwischen- oder Nebenprodukte, und/oder von Konsequenzen hinsichtlich der mit der Ausführung des industriellen Prozesses verbundenen Betriebskosten.

4. Verfahren gemäß Anspruch 1, bei dem eine quantitative Bestimmung der Wahrscheinlichkeit (P), der Schwere (S) und des Wartungsschwierigkeitsgrades (M) auf diskreten Skalen vorgenommen wird, die durch die vordefinierten Niveaus für Wahrscheinlichkeit (P), Schwere (S) und Wartungsschwierigkeitsgrad (M), insb. ein niedriges Niveau (LOW), ein mittleres Niveau (MEDIUM) und ein hohes Niveau (HIGH) für Wahrscheinlichkeit (P), Schwere (S) und Wartungsschwierigkeitsgrad (M), vorgegeben sind.

5. Verfahren gemäß Anspruch 4, bei dem jedem Niveau (LOW, MEDIUM, HIGH) für die Wahrscheinlichkeit (P), die Schwere (S) und den Wartungsschwierigkeitsgrad (M) ein fester numerischer Wert zugewiesen ist.

6. Verfahren gemäß Anspruch 1, bei dem das mit dem Betrieb des Messgerätes verbundene Risiko (R) basierend auf der Länge (LR) des Vektors (V) auf einer diskreten Skala klassifiziert ist, die durch die vordefinierten Risikoniveaus, insb. ein niedriges Niveau, das einen Bereich von Vektorlängenumfasst, die ein geringes Risiko darstellen, ein mittleres Niveau, das einen Bereich von Vektorlängen umfasst, die ein mittleres Risiko darstellen, ein hohes Niveau, das einen Bereich von Vektorlängen umfasst, die ein hohes Risiko darstellen, und ein nicht tragbares Niveau, das einen Bereich von Vektorlängen umfasst, die ein nicht tragbares Risiko darstellen, vorgegeben ist.

**Revendications**

1. Méthode d'évaluation d'un risque (R) associé au fonctionnement d'un dispositif de mesure sur un site de mesure au sein d'un process industriel, comprenant les étapes suivantes :

- détermination d'un degré de difficulté d'une maintenabilité (M) du dispositif basée sur une disponibilité de ressources pour la maintenance et/ou la réparation du dispositif, une disponibilité de pièces de rechange et/ou d'usure pour le dispositif et/ou une disponibilité de dispositifs de remplacement appropriés,
- détermination d'une probabilité (P) d'un défaut indétecté du dispositif,
- détermination d'une sévérité (S) des conséquences du défaut du dispositif,
- pondération de la probabilité (P) déterminée, de la sévérité (S) déterminée et du degré de difficulté de la maintenabilité (M) déterminé, avec des facteurs de pondération correspondants prédéfinis ($g_S$, $g_P$, $g_M$) correspondant à une contribution au risque (R) du degré de difficulté de la maintenabilité (M), la probabilité (P) et la sévérité (S), et
- détermination du risque (R) basée sur une longueur ($L_R$) d'un vecteur ($\tilde{V}$) dont les coordonnées sont définies par la difficulté pondérée de la maintenabilité ($g_M$ M), la probabilité pondérée ($g_P$ P) et la sévérité pondérée ($g_S$ S).

2. Méthode selon la revendication 1, pour laquelle la probabilité (P) d'un défaut indétecté du dispositif est déterminée sur la base :

- des propriétés spécifiques au dispositif, notamment sur une durée de vie prévue du dispositif, ses heures de fonctionnement et/ou son taux de panne statistique,
- des propriétés spécifiques au site de mesure, notamment sur les conditions environnantes régnant sur le site de mesure, notamment une exposition du dispositif de mesure aux températures et/ou pressions élevées ou variables, aux produits agressifs et/ou abrasifs et/ou aux vibrations, et/ou
- des moyens disponibles sur le site de mesure pour la détection d'un défaut du dispositif et d'une fréquence de leur application.

3. Méthode selon la revendication 1, pour laquelle la sévérité (S) des conséquences du défaut indétecté est déterminée sur la base des conséquences du défaut, notamment sur les conséquences relatives aux risques de sécurité pour les personnes, l'environnement et/ou le site de mesure et une usine de production industrielle, dans laquelle le site est intégré, des conséquences concernant une violation de règles, réglementations et/ou exigences auxquelles le dispositif doit se conformer, des conséquences concernant la qualité, la quantité et/ou la disponibilité de produits finis, semi-finis ou dérivés fabriqués par le process industriel, et/ou sur la base des conséquences concernant les coûts d'exploitation du process industriel.

4. Méthode selon la revendication 1, pour laquelle une détermination quantitative de la probabilité (P), la sévérité (S) et le degré de difficulté de la maintenabilité (M) est effectuée sur des échelles discrètes par des niveaux prédéfinis pour la probabilité (P), la sévérité (S) et le degré de difficulté de la maintenabilité (M), notamment un niveau faible (FAIBLE), un niveau moyen (MOYEN) et un niveau élevé (ÉLEVÉ) pour la probabilité (P), la sévérité (S) et le degré de difficulté de la maintenabilité (M).

5. Méthode selon la revendication 4, pour laquelle une valeur numérique fixe est assignée à chaque niveau (FAIBLE, MOYEN, ÉLEVÉ) de la probabilité (P), la sévérité (S) et le degré de difficulté de la maintenabilité (M).

6. Méthode selon la revendication 1, pour laquelle le risque (R) associé au fonctionnement du dispositif de mesure est classé sur la base de la longueur ($L_R$) d'un vecteur ($\tilde{V}$) sur une échelle discrète déterminée par les niveaux de risque prédéfinis, notamment un niveau faible comprenant une plage de longueurs vectorielles représentant un faible risque, un niveau moyen comprenant une plage de longueurs vectorielles représentant un risque moyen, un risque élevé comprenant une plage de longueurs vectorielles représentant un niveau élevé, et un niveau insupportable comprenant une plage de longueurs vectorielles représentant un risque insupportable.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Applied Safety Science 1-7 and Engineering Techniques (ASSET™), Taking HSBE to the Next Level. **THOMAS LANZISERO.** Symposium on Product Compliance Engineering (ISPCE). IEEE, 18 October 2010

- Extended Dependability Analysis of Information and Control Systems by FME(C)A-technique: Models, Procedures, Applications. **IRAJ ELYASI KOMARI.** Fourth International Conference on Dependability of Computer Systems. IEEE, 30 June 2009